# EUROPEAN PATENT SPECIFICATION

(11) **EP 2 006 122 B1**
(45) Date of publication and mention of the grant of the patent: **03.11.2010**
(21) Application number: 08010618.0
(22) Date of filing: 11.06.2008
(51) Int. Cl.: B60C 1/00, C08K 5/29, C08L 7/00, C08L 15/00, C08L 21/00

(54) **Rubber composition, clinch, and tire**
Kautschukzusammensetzung, Clinch und Reifen
Composition de caoutchouc, coussin de jante et pneu

(30) Priority: 18.06.2007 JP 2007160103
(43) Date of publication of application: 24.12.2008
(73) Proprietor: Sumitomo Rubber Industries, Ltd., Kobe-shi Hyogo-ken (JP)
(72) Inventor: Kikuchi, Naohiko, Kobe-shi Hyogo 651-0072 (JP); Iizuka, Toru, Kobe-shi Hyogo 651-0072 (JP)
(74) Representative: Manitz, Finsterwald & Partner GbR

(56) References cited:
- EP-A- 0 644 235
- EP-A- 1 686 152
- EP-A- 1 690 894
- WO-A-02/50180
- WO-A-99/20687
- US-A1- 2003 130 401
- DATTA R ET AL: "N-(1,3-DIMETHYLBUTYL)-N'-PHENYL-P-CHINOND IIMIN (Q-FLEX-QDI) - EINE MULTIFUNKTIONELLE CHEMIKALIE FUER DIE GUMMIINDUSTRIE" GUMMI, FASERN, KUNSTSTOFFE.INTERNATIONALE FACHZEITSCHRIFT FUR DIE POLYMER-VERARBEITUNG, GENTNER VERLAG. STUTTGART, DE, vol. 53, no. 7, 1 July 2000 (2000-07-01), pages 457-463, XP000935390 ISSN: 0176-1625

## Description

This nonprovisional application is based on Japanese Patent Application No. 2007-160103 filed with the Japan Patent Office on June 18, 2007, the entire contents of which are hereby incorporated by reference.

### BACKGROUND OF THE INVENTION

### Field of the Invention

The present invention relates to a rubber composition, a clinch, and a tire, and especially relates to a rubber composition for forming a clinch of a tire that can suppress the used amount of components derived from petroleum resources, that has good processability before vulcanization, and that can provide a rubber with high wear resistance and high strength after vulcanization, and a clinch and a tire formed using the rubber composition.

### Description of the Background Art

In tires that are on the market at present, half or more of their entire mass is constituted with components derived from petroleum resources. For example, a general radial tire for an automobile contains about 20% of a synthetic rubber, about 20% of carbon black, and other components such as aromatic oils and synthetic fibers as the components derived from petroleum resources to the entire mass of the tire, and 50% or more of the entire mass of the tire is constituted from components derived from petroleum resources.

However, the environmental problem has been taken very seriously in recent years, and a regulation of suppressing CO₂ exhaust has been reinforced. Further, because the petroleum resources are limited and the supply amount thereof has decreased every year, a sudden increase in the price of petroleum in the future can be predicted, and there is a limitation in the use of the components derived from the petroleum resources. Furthermore, in the case of confronting the drying up of the petroleum resources, it can be predicted that it will become difficult to manufacture a tire constituted from components derived from such petroleum resources.

Because of that, an "eco-tire" in which components that are not derived from petroleum resources (derived from resources other than petroleum) are used has been attracting attention (for example, refer to Japanese Patent Laying-Open No. 2004-339287).

EP 1 690 894 A1 discloses a rubber composition containing 100 parts by weight of natural rubber, 60 phr of silica and 5 phr of carbon black.

WO 02/50180 A1 relates to a rubber composition comprising a rubber component, 20 to 100 phr of silica, 1.6 to 8 phr of a silica coupling agent, 0.05 to 5 phr of an antidegradant, 0.1 to 5 phr of a vulcanization accelerator, 0.1 to 10 phr of sulfur and 0.5 to 5 phr of a quinine diimine. This rubber composition shall be applicable for a tire tread.

EP 1 686 152 A1, US 2003/0130401 A1 and EP 0 644 235 A1 relate to rubber compositions for a tire tread including epoxidized natural rubber and silica.

From a viewpoint of suppressing the used amount of components derived from petroleum resources further in the above-described the eco-tire, a clinch that is provided by crossing from a bottom face to a side face of a bead wire of a tire in order to decrease the generation of frictional wear of a tire rim with the bead wire is also preferably formed using components derived from resources other than petroleum as much as possible.

Therefore, it is considered to use silica that is derived from resources other than petroleum, for example, in place of carbon black that is derived from petroleum resources, as a filler for the rubber composition to form the clinch.

However, there is a problem that molding becomes difficult because the processability of the rubber composition decreases before vulcanization, wear resistance and strength of the rubber decrease after vulcanization, and the use as a clinch of the tire becomes difficult.

### SUMMARY OF THE INVENTION

In view of the above-described situation, an object of the present invention is to provide a rubber composition for forming a clinch of a tire that can suppress the used amount of components derived from petroleum resources, that has good processability before vulcanization, and that can provide a rubber with high wear resistance and high strength after vulcanization, and a clinch and a tire formed using the rubber composition.

The present invention provides a rubber composition for forming a clinch of a tire, which contains a rubber component containing at least one of a natural rubber and an epoxidized natural rubber, and not less than 30 parts by mass of silica and not less than 0.1 parts by mass to not more than 10 parts by mass of a quinone diimine compound based on 100 parts by mass of the rubber component, wherein the quinone diimine compound is benzenamine.

N-{4-[(1,3-dimethylbutyl)imino]-2,5-cyclohexadiene-1-ylidyne}-

Further, the content of carbon black to 100 parts by mass of the rubber component is preferably not more than 25 parts by mass in the rubber composition of the present invention.

Further, the rubber component contains a mixture of a natural rubber and an epoxidized natural rubber, and the content of the natural rubber is preferably not less than 50% by mass of the rubber component in the rubber composition of the present invention.

Further, the rubber composition of the present invention preferably contains a silane coupling agent.

Further, the present invention provides a clinch containing any of the above-described rubber compositions.

Furthermore, the present invention provides a tire manufactured using the above-described clinch.

According to the present invention, a rubber composition for forming a clinch of a tire that can suppress the used amount of components derived from petroleum resources, that has good processability before vulcanization, and that can provide a rubber with high wear resistance and high strength after the vulcanization, and a clinch and a tire formed using the rubber composition can be provided.

The foregoing and other objects, features, aspects and advantages of the present invention will become more apparent from the following detailed description of the present invention when taken in conjunction with the accompanying drawings.

### BRIEF DESCRIPTION OF THE DRAWING

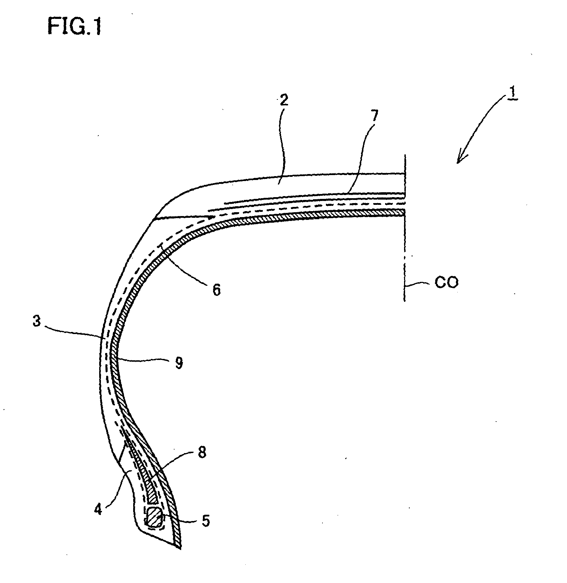

Fig. 1 is a schematic cross-sectional drawing of the upper left half of one example of the tire of the present invention.

### DESCRIPTION OF THE PREFERRED EMBODIMENTS

The embodiments of the present invention will be described in the following. The same reference numerals represent the same part or the corresponding parts in the drawing of the present invention.

As a result of devoted investigation by the present inventors, it was found that excellent clinch characteristics can be obtained in the case of producing a clinch using a rubber composition containing at least one of a natural rubber and an epoxidized natural rubber, and containing not less than 30 parts by mass of silica and not less than 0.1 part by mass to not more than 10 parts by mass of the aforementioned quinone diimine compound to 100 parts by mass of the rubber component, because the rubber composition has good processability before vulcanization, and can provide a rubber with high wear resistance and high strength after the vulcanization while suppressing the used amount of components derived from petroleum resources, and this finding has led to completion of the present invention.

### <Rubber Component>

In the present invention, one of a natural rubber and an epoxidized natural rubber, or a mixed rubber in which both of a natural rubber and an epoxidized natural rubber are mixed is used.

The used amount of the components derived from petroleum resources can be reduced by using a rubber component including at least one of the natural rubber and the epoxidized natural rubber for the rubber component as described above.

Here, a conventionally known natural rubber can be used, and a general natural rubber in the tire industry, such as RSS and TSR, can be used for the natural rubber.

A conventionally known epoxidized natural rubber can be used, and commercially available epoxidized natural rubbers, ones of which the natural rubber is epoxidized, or the like can be used for the epoxidized natural rubber.

Here, examples of the commercially available epoxidized natural rubbers that can be used include ENR 25 whose epoxidation ratio is 25% and ENR 50 whose epoxidation ratio is 50% sold by Kumplan Guthrie Berhad.

Further, examples of a method for epoxidizing a natural rubber, that can be used, include a chlorohydrine method, a direct oxidation method, an alkylhydroperoxide method, and a peracid method. Here, an example of the peracid method that can be used includes a method of reacting organic peracid such as peracetic acid and performic acid with a natural rubber. Here, the epoxidation ratio of the epoxidized natural rubber is preferably not less than 5 mol%, and more preferably not less than 10 mol%. In the case that the epoxidation ratio is not less than 5 mol%, especially not less than 10 mol%, physical properties thereof tend to be largely different from those of the natural rubber.

Further, the epoxidation ratio of the epoxidized natural rubber is preferably not more than 80 mol%, and more preferably not more than 60 mol%. Because generation of reversion during vulcanization is suppressed in the case that the epoxidation ratio is not more than 80 mol%, especially not more than 60 mol%, uniformity of the rubber composition after kneading can be made good, handling of the rubber composition becomes easy, and therefore, the molding procesability of the rubber composition and performance of the tire tend to be improved.

Here, the epoxidation ratio means the ratio (mol%) of the number of double bonds in the rubber after being epoxidized to the total number of double bonds in the rubber before being epoxidized.

Further, in the case of using a mixed rubber in which natural rubber and epoxidized natural rubber are mixed for the rubber component, the content of the natural rubber is preferably not less than 50% by mass, and more preferably not less than 60% by mass relative to the rubber component including the natural rubber and the epoxidized natural rubber. In the case that the content of the natural rubber is not less than 50% by mass, especially not less than 60% by mass relative to the rubber component, rolling resistance of the tire containing a bead apex produced using the rubber composition according to the present invention tends to decrease. Further, at least one type of rubbers such as a butadiene rubber (BR), a styrenebutadiene rubber (SBR), an isoprene rubber (IR), and a butyl rubber (IIR) may be contained as long as at least one of the natural rubber and the epoxidized natural rubber is contained in the rubber component according to the present invention.

### <Silica>

Further, not less than 30 parts by mass of silica relative to 100 parts by mass of the above-described rubber component is contained in the rubber composition according to the present invention. Because the used amount of carbon black as a filler can be reduced with such a configuration, the used amount of components derived from petroleum resources can be reduced, and sufficient reinforcing effect due to silica can be obtained. Moreover, a conventionally known silica can be used, and anhydrous silica and/or water-containing silica, etc. can be used for the silica.

Here, from a viewpoint of further obtaining sufficient reinforcing effect due to the silica, the content of the silica is preferably not less than 50 parts by mass, and more preferably not less than 55 parts by mass relative to 100 parts by mass of the above-described rubber component.

Further, from a viewpoint of suppressing the decrease of the molding processability of the rubber composition, the content of the silica is preferably not more than 100 parts by mass, and more preferably not more than 95 parts by mass relative to 100 parts by mass of the above-described rubber component.

Here, the nitrogen adsorption specific surface area (N₂SA) of the silica is preferably not less than 100 m²/g, and more preferably not less than 110 m²/g. In the case that the nitrogen adsorption specific surface area (N₂SA) of the silica is not less than 100 m²/g, especially not less than 110 m²/g, a sufficient reinforcing effect by the silica tends to be obtained.

Further, the nitrogen adsorption specific surface area (N₂SA) of the silica is preferably not more than 300 m²/g, and more preferably not more than 280 m²/g. In the case that the nitrogen adsorption specific surface area (N₂SA) of the silica is not more than 300 m²/g, especially not more than 280 m²/g, dispersibility and low heat build-up property of the silica tend to be improved.

### <Silane Coupling Agent>

Further, a silane coupling agent is preferably contained together with silica in the rubber composition of the present invention. Here, conventionally known silane coupling agents can be used, and examples thereof include sulfide-based agents such as
bis(3-triethoxysilylpropyl)tetrasulfide, bis(2-triethoxysilylethyl)tetrasulfide,
bis(3-trimethoxysilylpropyl)tetrasulfide, bis(2-trimethoxysilylethyl)tetrasulfide,
bis(3-triethoxysilylpropyl)trisulfide, bis(3-trimethoxysilylpropyl)trisulfide,
bis(3-triethoxysilylpropyl)disulfide, bis(3-trimethoxysilylpropyl)disulfide,
3-trimethoxysilylpropyl-N,N-dimethylthiocarbamoyltetrasulfide,
3-triethoxysilylpropyl-N,N-dimethylthiocarbamoyltetrasulfide,
2-triethoxysilylethyl-N,N-dimethylthiocarbamoyltetrasulfide,
2-trimethoxysilylethyl-N,N-dimethylthiocarbamoyltetrasulfide,
3-trimethoxysilylpropylbenzothiazolyltetrasulfide,
3-triethoxysilylpropylbenzothiazoletetrasulfide,
3-triethoxysilylpropylmethacrylatemonosulfide, and
3-trimethoxysilylpropylmethacrylatemonosulfide, mercapto-based agents such as
3-mercaptopropyltrimethoxysilane, 3-mercaptopropyltriethoxysilane,
2-mercaptoethyltrimethoxysilane, and 2-mercaptoethyltriethoxysilane, vinyl-based agents such as vinyltriethoxysilane and vinyltrimethoxysilane, amino-based agents such
as 3-aminopropyltriethoxysilane, 3-aminopropyltrimethoxysilane,
3-(2-aminoethyl)aminopropyltriethoxysilane, and
3-(2-aminoethyl)aminopropyltrimethoxysiane, glycidoxy-based agents such as γ-glycidoxypropyltriethoxysilane, γ-glycidoxypropyltrimethoxysilane,
γ -glycidoxypropylmethyldiethoxysilane, and γ-glycidoxypropylmethyldimethoxysilane,
nitro-based agents such as 3-nitropropyltrimethoxysilane and
3-nitropropyltriethoxysilane, and chloro-based agents such as
3-chloropropylmethoxysilane, 3-chloropropyltriethoxysilane,
2-chloroethyltrimethoxysilane, and 2-chloroethyltriethoxysilane. The silane coupling agents may be used alone, and two or more of them may be combined and used.

The content of the silane coupling agent is preferably not less than 4 parts by mass to 100 parts by mass of silica, and more preferably not less than 8 parts by mass. In the case that the content of the silane coupling agent is not less than 4 parts by mass to 100 parts by mass of silica, especially not less than 8 parts by mass, excellent processability can be obtained by suppressing an increase in the Mooney viscosity of the rubber composition of the present invention.

### <Carbon Black>

Conventionally known carbon black derived from petroleum resources may be included in the rubber composition of the present invention. However, from the viewpoint of decreasing the used amount of components derived from petroleum resources, the content of carbon black is preferably not more than 25 parts by mass to 100 parts by mass of the rubber component, more preferably not more than 5 parts by mass, and carbon black is most preferably not contained at all.

Further, a conventionally known carbon black such as SAF, ISAF, HAF, and FEF can be used for the carbon black.

Here, the nitrogen adsorption specific surface area (N₂SA) of the carbon black is preferably not less than 30 m²/g, and more preferably not less than 50 m²/g. In the case that the nitrogen adsorption specific surface area (N₂SA) of carbon black is not less than 30 m²/g, especially not less than 50 m²/g, sufficient reinforcing effect due to the carbon black tends to be obtained.

Further, the nitrogen adsorption specific surface area (N₂SA) of carbon black is preferably not more than 300 m²/g, and more preferably not more than 250 m²/g. In the case that the nitrogen adsorption specific surface area (N₂SA) of carbon black is not more than 300 m²/g, and especially not more than 250 m²/g, the processability of the rubber composition of the present invention tends to be improved.

### <Quinone Diimine Compound>

Further, not less than 0.1 part by mass and not more than 10 parts by mass of a quinone diimine compound relative to 100 parts by mass of the above-described rubber component is contained in the rubber composition according to the present invention. Here, the quinone diimine compound functions as an antioxidant, and has a function of lowering the Mooney viscosity of the rubber composition after kneading.

According to the present invention, benzenamine,
N-{4-[(1,3-dimethylbutyl)imino]-2,5-cyclohexadien-1-ylidyne}- represented by the following Formula (II) is used as the quinone diimine compound.

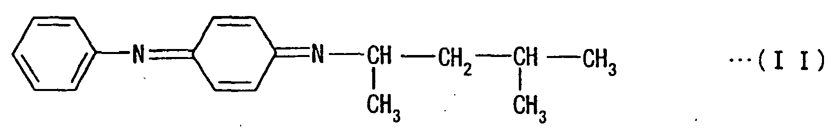

Further, the content of the quinone diimine compound is preferably not less than 1 part by mass to 100 parts by mass of the rubber component, and more preferably not less than 2 parts by mass. In the case the content of the quinone diimine compound is not less than 1 part by mass to 100 parts by mass of the rubber component, and especially not less than 2 parts by mass, the Mooney viscosity of the rubber composition of the present invention before vulcanization tends to be able to be lowered further.

Further, the content of the quinone diimine compound is preferably not more than 8 parts by mass to 100 parts by mass of the rubber component. In the case the content of the quinone diimine compound is not more than 8 parts by mass to 100 parts by mass of the rubber component, there is less tendency that the quinone diimine compound is bloomed on the surface of the rubber after vulcanization of the rubber composition of the present invention and the rubber is contaminated.

### <Other Components>

Various components such as waxes, various antioxidants, stearic acid, zinc oxide, vulcanization agent such as sulfur and various vulcanization accelerators generally used in tire industry may be appropriately compounded in the rubber composition of the present invention, other than the above-described components.

### <Rubber Composition>

The rubber composition of the present invention can be manufactured by mixing a rubber component containing at least one of the natural rubber and the epoxidized natural rubber, silica, and the quinone diimine compound. Here, it is needless to say that they may be mixed by appropriately adding conventionally known components depending on necessity.

Further, a conventionally known mixing method can be used as the mixing method used in manufacturing the rubber composition of the present invention, and examples thereof include a kneading method using a conventionally known open roll, a Banbury mixer, a pressure-type kneader, or a continuous kneader. Then, the clinch can be obtained by kneading and then extruding the rubber composition of the present invention into the desired shape with an extruder or the like.

### <Tire>

The above-described rubber composition of the present invention is processed into a prescribed shape in the non-vulcanized state by an extrusion process or the like, and the clinch is formed. Then, a green tire is produced by arranging tire members including the clinch formed in such a manner at prescribed positions, and then the tire of the present invention is manufactured by vulcanizing the rubber composition constituting each member of the green tire.

A schematic cross-sectional drawing of the upper left half of one example of the tire of the present invention is shown in Fig. 1. Here, a tire 1 is equipped with a tread 2 that becomes a grounding face of tire 1, a pair of side walls 3 configuring a side face of tire 1 by extending inward to the tire radius direction from both ends of tread 2, and bead cores 5 located on the inner end of each side wall 3. Further, a ply 6 is bridged over between bead cores 5, and a belt 7 having a hoop effect and reinforcing tread 2 is provided outside ply 6 and inside of tread 2.

Ply 6 can be formed from a rubber sheet having a plurality of cords buried therein having an angle of 70° to 90° to the tire midline CO (an imaginary line obtained by rotating the center of the width of the outer peripheral surface of tire 1 once in the circumferential direction of the outer peripheral surface of tire 1). Further, ply 6 is secured in by being folded back and surrounding bead cores 5 from tread 2 through side wall 3 from the inside to the outside of the tire axial direction.

Belt 7 can be formed from a rubber sheet having a plurality of cords buried therein having an angle of 40° or less to the tire midline CO, for example.

Further, a band (not shown in the drawing) to suppress peeling of belt 7 may be provided in tire 1 if necessary. Here, the band is made of, for example, a rubber sheet in which a plurality of cords are buried, and it can be provided by being spirally wound on the outside of belt 7 almost parallel to the tire midline CO.

Further, a bead apex 8 extending outward to the tire radius direction from bead core 5 is formed in tire 1, an inner liner 9 is provided inside ply 6, and the outside of the folded-back part of ply 6 is covered with side wall 3 and a clinch 4 extending inward to the tire radius direction from side wall 3. Clinch 4 is formed by vulcanizing the rubber composition of the present invention.

Because clinch 4 is formed in tire 1 having the above configuration using the rubber composition for a tire of the present invention, clinch 4 can be made to have high wear resistance and high strength, and therefore, the generation of wear loss of the rim by the bead wire of tire 1 can be reduced.

Further, because tire 1 having the above configuration can suppress the used amount of components derived from petroleum resources, it can be manufactured as an "eco-tire" that concerns the environment and that can prepare for a decrease in the supply amount of petroleum in future.

Tire 1 shown in Fig. 1 is a tire for an automobile. However, the present invention is not limited to this, and can be applied to various tires for applications such as an automobile, a truck, a bus, and a heavy load vehicle.

Further, from the viewpoint of suppressing the used amount of components derived from petroleum resources, it is needless to say that tire parts other than clinch 4 are preferably produced using components other than components derived from petroleum resources as much as possible.

### EXAMPLES

### <Production of Non-vulcanized Rubber Composition>

Following to the compounds shown in Table 1, a natural rubber, an epoxidized natural rubber, silica, a silane coupling agent, and a quinone diimine compound were kneaded at 130°C for 2 minutes with 1.7L of Banbury mixer manufactured by Kobe Steel., Ltd., and a master batch was obtained.

Then, after the master batch obtained as described above was exhausted once, components other than sulfur and a vulcanization accelerator were added in the master batch obtained as described above, kneaded at 130°C for 2 minutes with 1.7L of Banbury mixer manufactured by Kobe Steel, Ltd., and a kneaded product was obtained.

After that, the kneaded product obtained as described above, sulfur, and a vulcanization accelerator were kneaded at 95°C for 2 minutes with an open roll, each of the non-vulcanized rubber compositions of Example s 1 to 3 and Comparative Examples 1 to 3 were obtained. Moreover, the values shown in the other components column of Table 1 represent the compounded amount of each component shown in parts by mass with the rubber component being 100 parts by mass.

**Table 1**

| | | Example 1 | Example 2 | Example 3 | Comparative Example 1 | Comparative Example 2 | Comparative Example 3 |
|---|---|---|---|---|---|---|---|
| Rubber Component | Natural Rubber ^{(Note 1)} | 100 | 100 | 80 | 40 | 100 | 100 |
| | Epoxidized Natural Rubber ^{(Note 2)} | 0 | 0 | 20 | 0 | 0 | 0 |
| | Butadiene Rubber ^{(Note 3)} | 0 | 0 | 0 | 60 | 0 | 0 |
| Other Components | Carbon Black ^{(Note 4)} | 0 | 20 | 0 | 60 | 0 | 0 |
| | Silica ^{(Note 5)} | 80 | 60 | 80 | 0 | 80 | 60 |
| | Silane Coupling Agent ^{(Note 6)} | 8 | 6 | 8 | 0 | 8 | 6 |
| | Quinone Diimine Compound ^{(Note 7)} | 4 | 4 | 4 | 0 | 0 | 0 |
| | Wax ^{(Note 8)} | 1.5 | 1.5 | 1.5 | 1.5 | 1.5 | 1.5 |
| | Antioxidant ^{(Note 9)} | 1.5 | 1.5 | 1.5 | 1.5 | 1.5 | 1.5 |
| | Stearic Acid ^{(Note 10)} | 2 | 2 | 2 | 2 | 2 | 2 |
| | Zinc Oxide ^{(Note 11)} | 2.5 | 2.5 | 2.5 | 2.5 | 2.5 | 2.5 |
| | Sulfur ^{(Note 12)} | 1.8 | 1.8 | 1.8 | 1.8 | 1.8 | 1.8 |
| | Vulcanization Accelerator ^{(Note 13)} | 3 | 3 | 3 | 3 | 3 | 3 |
| Evaluation | Mooney Viscosity | 85 | 90 | 80 | 100 | 50 | 75 |
| | Sheet Processability | A | A | A | A | B | A |
| | Pico Wear Index | 100 | 105 | 105 | 100 | 105 | 85 |
| | Rubber Strength Index | 120 | 130 | 125 | 100 | 140 | 110 |

| | | | | | | | |
|---|---|---|---|---|---|---|---|
| (Note 1) Natural rubber (NR): TSR (Note 2) Epoxidized natural rubber (ENR): ENR 25 (epoxidation ratio: 25%) manufactured by Kumpulan Guthrie Berhad (Note 3) Butadiene rubber (BR): SBR1502 manufactured by JSR Corporation (Note 4) Carbon black: SHOWBLACK N330 (N₂SA: 115 m²/g) manufactured by Cabot Japan K. K. (Note 5) Silica: ULTRASIL VN3 (N₂SA: 175 m²/g) manufactured by Evonik Degussa (Note 6) Silane coupling agent: Si-69 (bis(3-triethoxysilylpropyl)tetrasulfide) manufactured by Evonik Degussa (Note 7) Quinone diimine compound: Q-FLEX QDI (Benzenamine, N-{4-[(1,3-dimethylbutyl) imino]-2,5-cyclohexadien-1-ylidyne}-) manufactured by FLEXSYS (Note 8) Wax: SUNNOC Wax manufactured by Ouchi Shinko Chemical Industrial Co., Ltd. (Note 9) Antioxidant: NOCRAC 6C (N-(1,3-dimethylbutyl)-N'-phenyl-p-pheylenediamine) manufactured by Ouchi Shinko Chemical Industrial Co., Ltd. (Note 10) Stearic acid: manufactured by NOF Corporation (Note 11) Zinc oxide: Zinc Flower No. 1 manufactured by Mitsui Mining & Smelting Co., Ltd. (Note 12) Sulfur: Powered sulfur manufactured by Tsurumi Chemical (Note 13) Vulcanization accelerator: NOCCELER-NS (N-tert-butyl-2-benzothiazolyl-sulfeneamide) manufactured by Ouchi Shinko Chemical Industrial Co., Ltd. | | | | | | | |

### < Mooney Viscosity>

The Mooney viscosity was measured on each of the non-vulcanized rubber compositions of Examples 1 to 3 and Comparative Examples 1 to 3 at a condition of 130°C in accordance with JIS K6300-1 "Non-vulcanized Rubber - Physical Properties - Part 1: How to Obtain Viscosity and Scorch Time with Mooney Viscometer." The results are shown in Table 1. The Mooney viscosity in Table 1 is represented by a relative value with the Mooney viscosity of the non-vulcanized rubber composition of Comparative Example 1 being 100.

Moreover, the larger the value of the Mooney viscosity in Table 1, the lower the Mooney viscosity is, and it shows the excellent molding processability. Here, the non-vulcanized rubber composition having a Mooney viscosity value of 80 or more in Table 1 was excellent in molding processability.

### <Sheet Processability>

A non-vulcanized rubber sheet including each of the non-vulcanized rubber compositions of Examples 1 to 3 and Comparative Examples 1 to 3 was obtained by sheeting each of the non-vulcanized rubber compositions of Examples 1 to 3 and Comparative Examples 1 to 3 using a roll.

The surface of these vulcanized sheets was confirmed visually, and a shape of the non-vulcanized rubber sheet was confirmed. The results are shown in Table 1.

In the column of the sheet processability in Table 1, the sheet in which problems such as cut selvage were not confirmed and that have good sheet processability are represented by A, and the sheets in which problems such as cut selvage were confirmed and that do not have good sheet processability are represented by B.

### <Pico Wear Text>

Each of the vulcanized rubber sheets of Examples 1 to 3 and Comparative Examples 1 to 3 was obtained by vulcanizing each of the non-vulcanized rubber compositions of Examples 1 to 3 and Comparative Examples 1 to 3 obtained as described above at 150°C for 30 minutes.

Then, a wear volume of each vulcanized rubber sheet was measured by wearing the vulcanized rubber sheets of Examples 1 to 3 and Comparative Examples 1 to 3 obtained as described above in accordance with JIS K6264-2 "Vulcanized Rubber and Thermoplastic Rubber - How to Obtain Wear Resistance - Part 2: Testing Method" using a pico wear tester manufactured by Ueshima Seisakusho Co., Ltd. Then, each of the pico wear indexes of the vulcanized rubber sheets in Examples 1 to 3 and Comparative Examples 1 to 3 was calculated by the following formula (1) with the wear volume of the vulcanized rubber sheet of Comparative Example 1 being 100. The results are shown in Table 1.
(Pico Wear Index) = 100 x (Wear Volume of Vulcanized Rubber Sheet of Comparative Example 1)/(Wear Volume of Each Vulcanized Rubber Sheet of Examples 1 to 3 and Comparative Examples 1 to 3) (1)

The value of the pico wear index in Table 1 of 100 or more shows an excellent wear resistance with a rim.

### <Tensile Test>

A tensile test was performed on each of the vulcanized rubber sheets of Examples 1 to 3 and Comparative Examples 1 to 3 using a test piece in the form of a dumbbell No. 3 in accordance with JIS K6251 "Vulcanized Rubber and Thermoplastic Rubber - How to Obtain Tensile Characteristics". Then, breaking energy (TS x Eb/2) was calculated from the tensile strength (TS) and the elongation at breakage (Eb) on each of the vulcanized rubber sheets of Examples 1 to 3 and Comparative Examples 1 to 3, and then a rubber strength index was calculated from the following formula (2) with the breaking energy in Comparative Example 1 being 100. The results are shown in Table 1.
(Rubber Strengh Index) = 100x (Breaking Energy of Each Vulcanized Rubber Sheet of Examples 1 to 3 and Comparative Examples 1 to 3)/(Breaking Energy of Vulcanized Rubber Sheet of Comparative Example 1) (2)

It is shown that the larger the value of the rubber strength index in Table 1 is, the more difficult it becomes to be cracked because of the excellent rubber strength.

### <Evaluation>

As is obvious from the results shown in Table 1, the rubber compositions of Examples 1 to 3 that contain a rubber component containing at least one of a natural rubber and an epoxidized natural rubber and containing not less than 30 parts by mass of silica and not less than 0.1 part by mass to not more than 10 parts by mass of the specific quinone diimine compound according to the present invention to 100 parts by mass of the rubber component have the same level of sheet processability as the rubber composition of Comparative Example 1 that is a conventional rubber composition for a clinch using only carbon black and not silica before vulcanization. Further, after vulcanization, the rubber compositions of Examples 1 to 3 showed a result that they not only have the same level of the pico wear index as the rubber composition of Comparative Example 1, but also are superior in the rubber strength index than the rubber composition of Comparative Example 1.

Further, as shown in Table 1, when the rubber composition of Example 1 and the rubber composition of Comparative Example 2 are compared, the rubber composition of Example 1 containing 4 parts by mass of the specific quinone diimine compound according to the present invention relative to 100 parts by mass of the rubber component has a result of having a lower Mooney viscosity and being excellent in sheet processability compared with the rubber composition of Comparative Example 2 not containing the quinone diimine compound.

Furthermore, as shown in Table 1, the rubber compositions of Examples 1 to 3 having the above-described configuration have a result that they are lower in the Mooney viscosity before vulcanization than the rubber composition of Comparative Example 3 that does not contain the quinone diimine compound.

Therefore, from the above results, because the rubber compositions of Examples 1 to 3 have a low Mooney viscosity and excellent processability before vulcanization, and have wear resistance and high strength after vulcanization while suppressing the used amount of components derived from petroleum resources, the rubber compositions of Examples 1 to 3 are considered to be preferably used in the formation of a clinch of a tire.

According to the present invention, a rubber composition for forming a clinch of a tire that can suppress the used amount of components derived from petroleum resources, that has good processability before vulcanization, and that can provide a rubber with high wear resistance and high strength after vulcanization, and a clinch and a tire formed using the rubber composition can be provided.

Although the present invention has been described and illustrated in detail, it is clearly understood that the same is by way of illustration and example only and is not to be taken by way of limitation, the scope of the present invention being interpreted by the terms of the appended claims.

## Claims

1. A rubber composition for forming a clinch of a tire, comprising a rubber component containing at least one of a natural rubber and an epoxidized natural rubber, and not less than 30 parts by mass of silica and not less than 0.1 parts by mass to not more than 10 parts by mass of a quinone diimine compound based on 100 parts by mass of said rubber component, wherein said quinone diimine compound is benzenamine, N-{4-[(1,3-dimethylbutyl)imino]-2,5-cyclohexadiene-1-ylidyne}-.

2. The rubber composition according to claim 1, wherein a content of carbon black relative to 100 parts by mass of said rubber component is not more than 25 parts by mass.

3. The rubber composition according to claim 1, wherein said rubber component comprises a mixture of a natural rubber and an epoxidized natural rubber, and the content of said natural rubber is not less than 50% by mass of said rubber component.

4. The rubber composition according to claim 1, comprising a silane coupling agent.

5. A clinch comprising the rubber composition according to claim 1.

6. A tire manufactured using the clinch according to claim 6.

## Patentansprüche

1. Kautschukzusammensetzung zum Ausbilden eines Abriebstreifens eines Reifens, enthaltend eine Kautschukkomponente, welche wenigstens einen von einem Naturkautschuk und einem epoxidierten Naturkautschuk enthält, sowie nicht weniger als 30 Massenteile Silica und nicht weniger als 0,1 Massenteile bis nicht mehr als 10 Massenteile einer Chinondiiminverbindung bezogen auf 100 Massenteile der Kautschukkomponente, wobei die Chinondiiminverbindung Benzamin-N-{4-[(1,3-Dimethylbutyl)imino]-2,5-cyclohexadien-1-ylidin} ist.

2. Kautschukzusammensetzung nach Anspruch 1, wobei die Menge an Ruß bezogen auf 100 Massenteile der Kautschukkomponente nicht mehr als 25 Massenteile beträgt.

3. Kautschukzusammensetzung nach Anspruch 1, wobei die Kautschukkomponente eine Mischung aus einem Naturkautschuk und aus einem epoxidierten Naturkautschuk enthält, und, wobei die Menge des Naturkautschuks nicht weniger als 50 Massenteile bezogen auf die Kautschukkomponente beträgt.

4. Kautschukzusammensetzung nach Anspruch 1, welche ein Silankupplungsmittel enthält.

5. Abriebstreifen, welcher eine Kautschukzusammensetzung nach Anspruch 1 enthält.

6. Reifen, welcher unter der Verwendung eines Abriebstreifens nach Anspruch 6 hergestellt worden ist.

## Revendications

1. Composition de caoutchouc pour former un talon d'un pneu, comprenant un composant de caoutchouc contenant au moins un caoutchouc naturel et un caoutchouc naturel époxydé, et pas moins de 30 parties en poids de silice et pas moins de 0,1 partie en poids à pas plus de 10 parties en poids d'un composé quinone diimine sur la base de 100 parties en poids dudit composant de caoutchouc, dans laquelle ledit composé quinone diimine est la benzénamine, le N-{4-[(1,3-diméthylbutyl)imino]-2,5-cyclohexadiène-1-ylidyne}.

2. Composition de caoutchouc selon la revendication 1, dans laquelle une teneur de noir de carbone par rapport à 100 parties en poids dudit composant de caoutchouc est de pas plus de 25 parties en poids.

3. Composition de caoutchouc selon la revendication 1, dans laquelle ledit composant de caoutchouc comprend un mélange d'un caoutchouc naturel et d'un caoutchouc naturel époxydé, et la teneur dudit caoutchouc naturel est de pas moins de 50 % en poids dudit composant de caoutchouc.

4. Composition de caoutchouc selon la revendication 1, comprenant un agent de couplage de silane.

5. Talon comprenant la composition de caoutchouc selon la revendication 1.

6. Pneu fabriqué en utilisant le talon selon la revendication 6.
